# EUROPEAN PATENT SPECIFICATION

(11) **EP 2 890 576 B1**
(45) Date of publication and mention of the grant of the patent: **01.03.2017**
(21) Application number: 13823989.2
(22) Date of filing: 18.12.2013
(51) Int. Cl.: B60J 10/88, B60J 10/78, B60J 5/04

(54) **VEHICLE SIDE DOOR STRUCTURE**
STRUKTUR EINER FAHRZEUGSEITENTÜRE
STRUCTURE DE PORTE LATÉRALE DE VÉHICULE

(30) Priority: 20.12.2012 JP 2012278352
(43) Date of publication of application: 08.07.2015
(73) Proprietor: TOYOTA JIDOSHA KABUSHIKI KAISHA, Toyota-shi, Aichi-ken, 471-8571 (JP)
(72) Inventor: KOIKE, Hiroyuki, Toyota-shi, Aichi-ken, 471-8571 (JP)
(74) Representative: TBK
(86) International application number: PCT/IB2013/002798
(87) International publication number: WO 2014/096934

(56) References cited:
- WO-A1-2008/113156
- DE-A1- 19 922 995
- JP-A- 2012 106 715
- JP-U- H0 423 519

## Description

### BACKGROUND OF THE INVENTION

### 1. Field of the Invention

The invention relates to a vehicle side door structure according to the preamble of claim 1. Such a structure is known from DE 19922995 A.

### 2. Description of Related Art

For example, Japanese Utility Model Application Publication No. 04-23519 (JP 04-23519 U) describes a technique for fixing a division bar to a door frame by pressing the distal end of a bracket against a flat portion of the door frame in a state where the bracket is fixed to the upper end of the division bar (pillar frame)and fastening the bracket to the door frame with a screw. In addition, Japanese Patent Application Publication No. 2012-106715 (JP 2012-106715 A) describes a technique for attaching a resin glass run channel (glass run channel) to a door frame in a state where a flange portion is provided at the door frame and the flange portion is sandwiched by the resin glass run channel in order to make it difficult for the resin glass run channel to fall off from the door frame.

Therefore, if the invention described in JP 2012-106715 A is applied to the invention described in JP 04-23519 U and the resin glass run channel is attached so as to sandwich the flat portion of the door frame, a shaft portion of the screw becomes an obstacle because the shaft portion projects from the lower side of the frame flat portion. Therefore, it is required to avoid interference with the shaft portion by forming a cutout portion in part of the resin glass run channel. However, if the resin glass run channel has the cutout portion, a design surface of the resin glass run channel may have a warp due to thermal effect, or the like.

### SUMMARY OF THE INVENTION

The invention provides a vehicle side door structure that is able to suppress a deformation of a design surface of a glass run channel due to thermal effect, or the like, even when the glass run channel is attached to a door frame so as to sandwich a flange portion of the door frame.

An aspect of the invention provides a vehicle side door structure. The vehicle side door structure includes: a door frame having a flange portion extending outward in a vehicle width direction, a glass run channel being attached to the flange portion so as to sandwich the flange portion, the door frame supporting an end portion of a door glass; a bracket connected to a portion of the door frame, the portion being different from the flange portion; and a pillar frame mounted on the bracket so as to extend in a vehicle up-and-down direction on an inner side of the door frame, the pillar frame supporting an end portion of the door glass together with the door frame.

In the vehicle side door structure according to the above aspect, in the door frame that supports the end portion of the door glass, the flange portion extends outward in the vehicle width direction, and the glass run channel is attached to the door frame so as to sandwich the flange portion. The bracket is connected to the portion of the door frame, which is different from the flange portion. The pillar frame is mounted on the door frame via the bracket so as to extend in the vehicle up-and-down direction on the inner side of the door frame, and the end portion of the door glass is supported by the pillar frame together with the door frame.

For example, it is assumed that a fastener is fastened (connected) to a bracket at the flange portion of the door frame. In this case, the glass run channel that is attached so as to sandwich the flange portion needs to change its cross-sectional shape by, for example, forming a cutout portion (forming a cross-section sudden change portion) in order to avoid interference with the fastener.

However; in the aspect of the invention, because the bracket is connected to the portion of the door frame, which is different from the flange portion, it is possible to ensure continuity in the cross-sectional shape of the glass run channel attached so as to sandwich the flange portion. That is, in the cross-sectional shape of the glass run channel, there is no cross-section sudden change portion that can be formed by connecting the bracket. With the vehicle side door structure according to the above aspect, even when the glass run channel is attached to the door frame so as to sandwich the flange portion of the door frame, it is possible to inhibit a deformation of the design surface of the glass run channel due to thermal effect, or the like.

In the vehicle side door structure according to the above aspect, the bracket may have a long plate shape, and may include a first connecting portion extending in a vehicle longitudinal direction at an upper portion of the bracket and connected to the door frame and a second connecting portion extending in a vehicle width direction on a lower side of the first connecting portion and to which the pillar frame is connected.

In the vehicle side door structure according to the above aspect, the bracket has a long plate shape, and includes the first connecting portion and the second connecting portion. The first connecting portion extends in the vehicle longitudinal direction at the upper portion of the bracket, and is connected to the door frame. On the other hand, the second connecting portion extends in the vehicle width direction on the lower side of the first connecting portion, and the pillar frame is connected to the second connecting portion. The bracket is connected to the door frame at the first connecting portion, and the pillar frame is connected to the bracket at the second connecting portion. Thus, the pillar frame is connected to the door frame via the bracket. With the vehicle side door structure according to the above aspect, it is possible to change the shape of the bracket in accordance with the shape and connecting method of the door frame and the pillar frame, so general versatility is high.

In the vehicle side door structure according to the above aspect, the second connecting portion may be fastened to the pillar frame with a fastener, and the pillar frame may have a recessed seat portion in which a head portion of the fastener is accommodated.

In the vehicle side door structure according to the above aspect, the second connecting portion of the bracket is fastened to the pillar frame with the fastener, and the pillar frame has the recessed seat portion in which the head portion of the fastener is accommodated. Thus, it is possible for the head portion of the fastening portion not to protrude from the surface of the pillar frame. With the vehicle side door structure according to the above aspect, at the time when the glass run channel is attached to the pillar frame, it is possible to avoid interference between the head portion of the fastener and the glass run channel.

In the vehicle side door structure according to the above aspect, the second connecting portion may have a relief portion that avoids interference with the seat portion.

In the vehicle side door structure according to the above aspect, the second connecting portion of the bracket has the relief portion that avoids interference with the seat portion formed in the pillar frame, so it is possible to overlappingly arrange the pillar frame and the bracket at least at a portion other than the second connecting portion. With the vehicle side door structure according to the above aspect, it is possible to improve the stiffness of the pillar frame.

In the vehicle side door structure according to the above aspect, the door frame may be formed of a light metal material by extrusion molding.

In the vehicle side door structure according to the above aspect, when the door frame is formed of a light metal material by extrusion molding, it is possible to increase the thickness of the door frame in comparison with the case where the door frame is formed by roll forming. Thus, it is possible to tap a screw thread for fastening a screw at the connecting portion with the bracket. With the vehicle side door structure according to the above aspect, it is possible to reduce weight and cost.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is an exploded perspective view that shows a relevant portion of a door frame to which a vehicle side door structure according to an embodiment of the invention is applied;
FIG. 2 is a perspective view that shows the relevant portion of the door frame to which the vehicle side door structure according to the embodiment of the invention is applied with the relevant portion of the door frame partially cut away;
FIG. 3 is a cross-sectional view that shows the relevant portion of the door frame to which the vehicle side door structure according to the embodiment of the invention is applied in a cross-section taken along a vehicle up-and-down direction and a vehicle width direction;
FIG. 4 is a cross-sectional view of a pillar frame, taken along the line IV-IV in FIG. 5;
FIG. 5 is a schematic side view that shows a rear side door to which the vehicle side door structure according to the embodiment of the invention is applied;
FIG. 6 is an exploded perspective view that shows a first alternative embodiment of the door frame to which the vehicle side door structure according to the embodiment of the invention is applied;
FIG. 7 is a cross-sectional view corresponding to FIG. 3, showing the first alternative embodiment of the door frame to which the vehicle side door structure according to the embodiment of the invention is applied; and
FIG. 8 is a cross-sectional view corresponding to FIG. 3, showing a second alternative embodiment of the door frame to which the vehicle side door structure according to the embodiment of the invention is applied.

### DETAILED DESCRIPTION OF EMBODIMENTS

Hereinafter, a vehicle side door structure according to an embodiment of the invention will be described with reference to the accompanying drawings. In these drawings, the arrow FR indicates a vehicle front side, the arrow UP indicates a vehicle upper side, and the arrow OUT indicates an outer side in a vehicle width direction.

### Configuration of Vehicle Side Door Structure

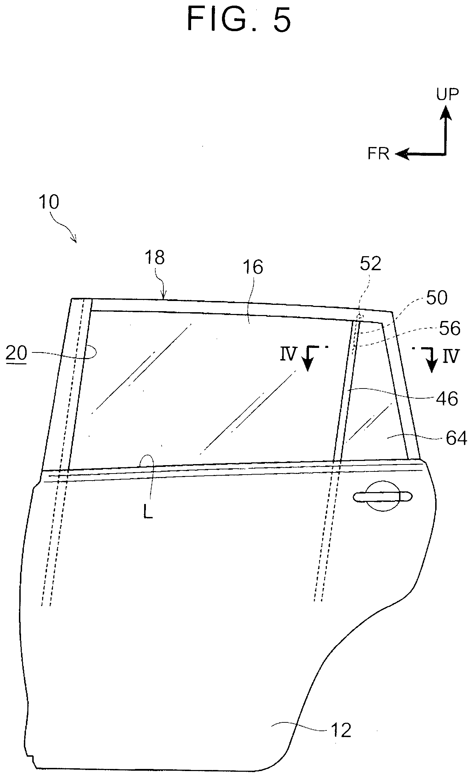

As shown in FIG. 5, in a rear side door 10, a door outer panel 12 is arranged at the outer side in the vehicle width direction, and a door inner panel (not shown) is arranged on the inner side of the door outer panel 12 in the vehicle width direction. The door outer panel 12 and the door inner panel are connected to each other so as to form a closed section, and a window regulator (not shown) is provided between the door outer panel 12 and the door inner panel. With the window regulator, a door glass 16 is movable up and down between the door outer panel 12 and the door inner panel.

A door frame 18 is provided at the upper portion of the rear side door 10. The door frame 18 has an inverted U shape that is open downward in a vehicle up-and-down direction (vehicle lower side). The door frame 18 is connected to the door inner panel via a bracket (not shown). An opening portion 20 is formed between the door frame 18 and the upper end portion (so-called belt line L) of the door inner panel. The opening portion 20 is opened or closed by moving the door glass 16 up and down.

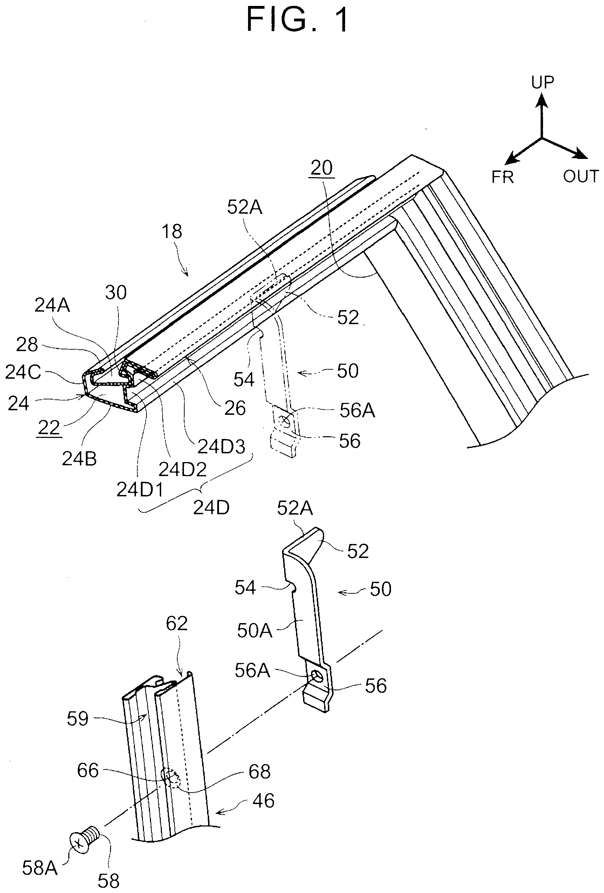

The door frame 18 will be described first. As shown in FIG. 1, the door frame 18 includes a frame body portion 24 and a flange portion 26. The frame body portion 24 has a hollow portion 22 inside. The flange portion 26 extends outward in the vehicle width direction from the upper end portion of the outer side of the frame body portion 24 in the vehicle width direction.

The frame body portion 24 has a trapezoidal shape in cross section taken along the vehicle up-and-down direction. The frame body portion 24 includes an upper wall portion 24A, a lower wall portion 24B, an inner wall portion 24C and an outer wall portion 24D. The upper wall portion 24A is located at the upper portion in the vehicle up-and-down direction. The lower wall portion 24B is located at the lower portion in the vehicle up-and-down direction. The inner wall portion 24C is located at the inner side in the vehicle width direction. The outer wall portion 24D is located at the outer side in the vehicle width direction.

In the frame body portion 24, the outer wall portion 24D (described later) and the inner wall portion 24C are formed along the vehicle up-and-down direction, and the lower wall portion 24B that connects the lower end portion of the outer wall portion 24D to the lower end portion of the inner wall portion 24C is formed along the vehicle width direction. The outer wall portion 24D is formed so as to be longer than the inner wall portion 24C. The upper wall portion 24A that connects the upper end portion of the outer wall portion 24D to the upper end portion of the inner wall portion 24C is formed so as to be inclined upward in the vehicle up-and-down direction (vehicle upper side) as shifting toward the outer wall portion 24D.

Here, an outer wall recessed groove 24D1 that is recessed toward the inner wall portion 24C is formed in the outer wall portion 24D along the longitudinal direction of the frame body portion 24, an outer wall upper portion 24D2 is on the upper side of the outer wall recessed groove 24D1, and an outer wall lower portion 24D3 is on the lower side of the outer wall recessed groove 24D1.

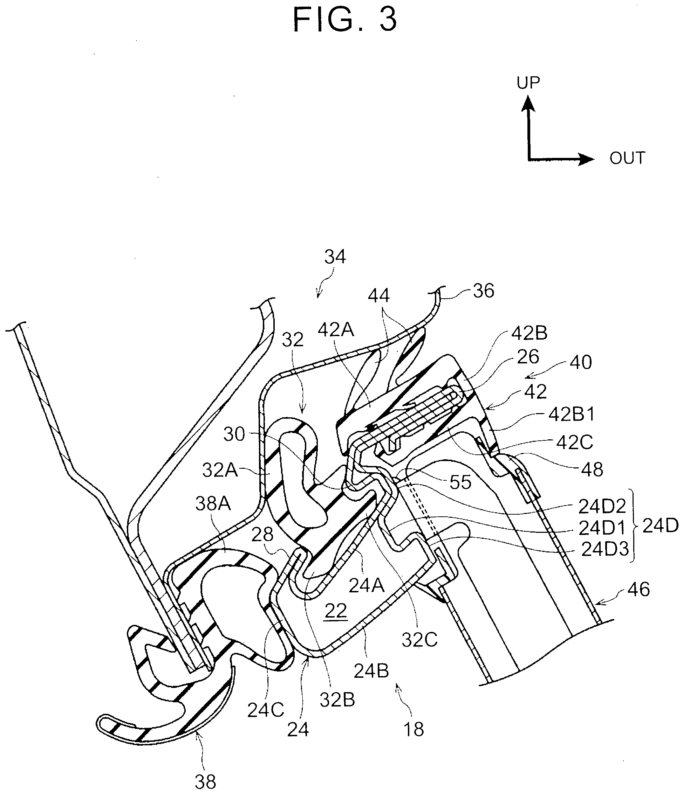

The door frame 18 is, for example, formed of an aluminum alloy by roll forming. One end portion of a plate material in the lateral direction that intersects with the longitudinal direction before the door frame 18 is formed is sandwiched by the other end side of the door frame 18 in the lateral direction in a state where the door frame 18 is formed. Therefore, as shown in FIG. 3, three sheets of plate materials are overlapped at the flange portion 26 of the door frame 18, and two sheets of plate materials are overlapped at the outer wall upper portion 24D2.

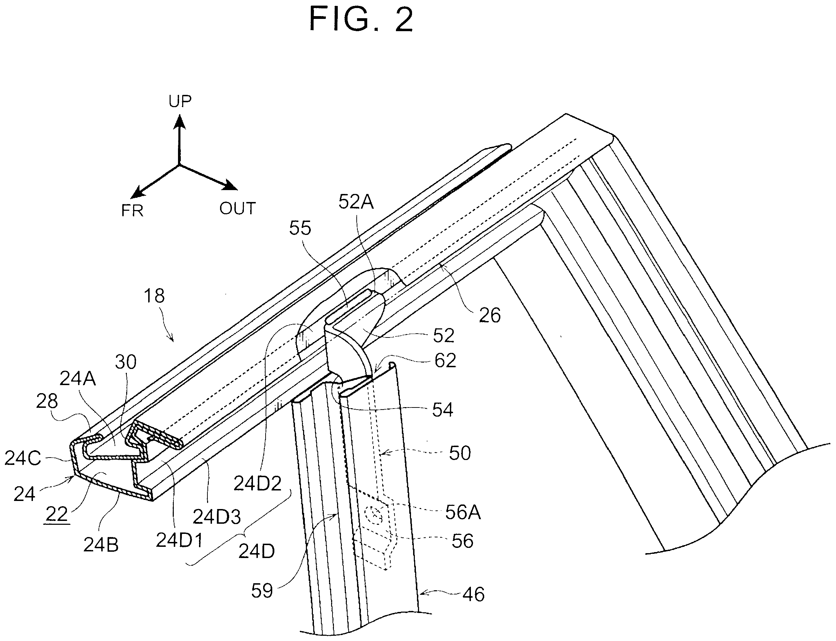

An engaging piece 28 extends outward in the vehicle width direction from the upper end portion of the inner wall portion 24C of the frame body portion 24 so as to be substantially parallel to the upper wall portion 24A. Furthermore, an engaging pawl 30 protrudes from the upper end portion of the outer wall portion 24D of the frame body portion 24 so as to face the engaging piece 28. A weather strip 32 is attached to the frame body portion 24 via the engaging pawl 30 and the engaging piece 28. In consideration of easiness of the drawings, the weather strip 32 is not shown in FIG. 1 and FIG. 2, and a glass run channel 40 (described later) is also not shown in FIG. 1 and FIG. 2 as in the case of the weather strip 32.

The weather strip 32 shown in FIG. 3 is formed of a tubular elastic material, such as rubber. In the cross-sectional shape taken along the vehicle up-and-down direction and the vehicle width direction, the weather strip 32 includes a body portion 32A and leg portions 32B, 32C. The body portion 32A has a circular shape. The leg portions 32B, 32C project along the vehicle width direction of the body portion 32A. The leg portions 32B, 32C are respectively engaged with the engaging piece 28 and the engaging pawl 30. On the other hand, the body portion 32A is in press contact with a side outer panel 36 that constitutes part of a roof side rail 34, and that is arranged at the outer side in the vehicle width direction. The body portion 32A seals the gap between the roof side rail 34 and the door frame 18.

An opening weather strip 38 is provided at the outer peripheral portion of the roof side rail 34 in the vehicle width direction. A body portion 38A of the opening weather strip 38 is in press contact with the inner wall portion 24C of the door frame 18 and the engaging piece 28, and seals the gap between the roof side rail 34 and the door frame 18 together with the weather strip 32.

On the other hand, the glass run channel 40 is attached to the door frame 18. The glass run channel 40 is formed of an elastic material, such as rubber. In the cross-sectional shape taken along the vehicle up-and-down direction, the glass run channel 40 includes a U-shaped sandwiching portion 42 that is open at the inner side in the vehicle width direction. In a state where the sandwiching portion 42 sandwiches the flange portion 26 formed in the door frame 18, the glass run channel 40 is attached to the door frame 18.

The sandwiching portion 42 includes an upper wall 42A, a side wall 42B and a lower wall 42C. A pair of lip portions 44 extends upward in the vehicle up-and-down direction from the upper surface of the upper wall 42A. The lip portions 44 extend in the vehicle longitudinal direction, and contact the side outer panel 36 when the rear side door 10 (see FIG. 5) is closed.

A trailing wall 42B1 is sagging downward in the vehicle up-and-down direction from the side wall 42B of the sandwiching portion 42. The trailing wall 42B1 is contactable with a terminal cap 48 that is fitted to the upper end portion of a pillar frame 46 (described later). The trailing wall 42B1 inhibits the terminal cap 48 from falling off, and buries the gap from the terminal cap 48.

Next, a bracket 50 will be described. As shown in FIG. 5, the bracket 50 is connected to the rear side of the door frame 18 in the vehicle longitudinal direction. The bracket 50 is a member for connecting the door frame 18 to the pillar frame 46, and has a long plate shape so as to extend in the vehicle up-and-down direction.

As shown in FIG. 1, a connecting portion 52 projects from a bracket body 50A at the upper portion of the bracket 50. The connecting portion 52 serves as a first connecting portion that is bent rearward in the vehicle longitudinal direction. An upper end portion 52A of the connecting portion 52 is, for example, arc-welded to the outer wall upper portion 24D2 of the door frame 18 (connecting portion 55 shown in FIG. 2). The bracket 50 is connected to the door frame 18 via the connecting portion 52.

A circular-arc cutout portion 54 is formed at the proximal portion of the connecting portion 52 of the bracket 50. The cutout portion 54 is cut out inward in the vehicle width direction in the bracket body 50A. The connecting portion 52 is bent with respect to the bracket body 50A via the cutout portion 54. A relief portion 56 is provided at the lower portion of the bracket 50. The relief portion 56 serves as a second connecting portion that is recessed rearward in the vehicle longitudinal direction. A fastening hole 56A is formed through the center portion of the relief portion 56. A countersunk screw 58 that serves as a fastener is screwed to the fastening hole 56A.

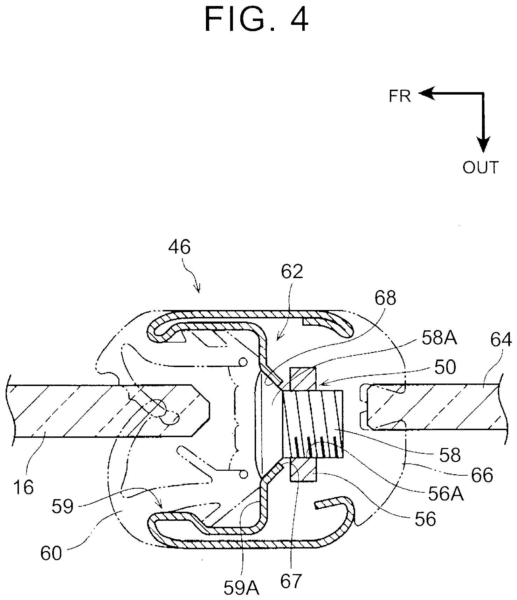

Here, the pillar frame 46 extends in the vehicle up-and-down direction. The pillar frame 46 is, for example, formed of an aluminum alloy by roll forming. As shown in FIG. 4, the cross-sectional shape of the pillar frame 46, taken along the vehicle longitudinal direction, is substantially an I shape.

A substantially U-shaped mounting portion 59 is provided at the front portion of the pillar frame 46 in the vehicle longitudinal direction. The mounting portion 59 is open at the front side in the vehicle longitudinal direction. A glass run channel 60 (indicated by the imaginary line) is mounted on the mounting portion 59. The glass run channel 60 sandwiches the side end portion of the door glass 16.

A substantially U-shaped mounting portion 62 is provided at the rear portion of the pillar frame 46 in the vehicle longitudinal direction. The mounting portion 62 shares a bottom wall 59A of the mounting portion 59 and is open at the rear side in the vehicle longitudinal direction. A glass run channel 66 (indicated by the imaginary line) is mounted on the mounting portion 62. The glass run channel 66 sandwiches the end portion of a door glass 64.

An insertion hole 67 through which the countersunk screw 58 is inserted is formed in the pillar frame 46. A recessed seat portion 68 is provided at the inner peripheral portion of the insertion hole 67. The seat portion 68 has a truncated cone shape toward the rear side in the vehicle longitudinal direction. A head portion 58A of the countersunk screw 58 that is screwed to the fastening hole 56A formed in the bracket 50 is accommodated in the seat portion 68. The relief portion 56 is provided in the bracket 50, and avoids interference with the seat portion 68 of the pillar frame 46.

With the above-described configuration, as shown in FIG. 2, the connecting portion 52 of the bracket 50 is welded to the door frame 18, and the pillar frame 46 is fastened to the bracket 50 with the countersunk screw 58 (see FIG. 4). Thus, the pillar frame 46 is connected to the door frame 18 via the bracket 50.

### Operation and Advantageous Effect of Vehicle Side Door Structure

As shown in FIG. 3, in the present embodiment, the flange portion 26 is formed at the outer side of the door frame 18 in the vehicle width direction. In a state where the glass run channel 40 that sandwiches the end portion of the door glass 16 sandwiches the flange portion 26, the glass run channel 40 is attached to the door frame 18.

The bracket 50 for indirectly connecting the pillar frame 46 to the door frame 18 is welded to the outer wall upper portion 24D2 of the door frame 18. That is, the bracket 50 is connected to a portion (outer wall upper portion 24D2) of the door frame 18, which is different from the flange portion 26, and the pillar frame 46 is connected to the door frame 18 via the bracket 50 so as to extend in the vehicle up-and-down direction on the inner side of the door frame 18.

For example, it is assumed that a fastener is fastened (connected) to a bracket at the flange portion 26 of the door frame 18 although not shown in the drawing. In this case, the glass run channel that is attached so as to sandwich the flange portion needs to change its cross-sectional shape by, for example, forming a cutout portion (forming a cross-section sudden change portion) in order to avoid interference with the fastener. Because the glass run channel extends or contracts in proportion to the temperature, stress easily concentrates at the cross-section sudden change portion, with the result that a deformation easily occurs at the design surface due to external force. Stress easily concentrates at the.cross-section sudden change portion due to external force at the time of assembling work or at the time of parts transportation, and a deformation may occur at the design surface.

However, in the present embodiment, as shown in FIG. 2, because the bracket 50 is welded to the portion (outer wall upper portion 24D2) of the door frame 18 (connecting portion 55), which is different from the flange portion 26, it is possible to ensure continuity in the cross-sectional shape of the glass run channel 40 attached so as to sandwich the flange portion 26.

That is, in the cross-sectional shape of the glass run channel 40, there is no cross-section sudden change portion that can be formed by connecting the bracket 50. Thus, according to the present embodiment, even when the glass run channel 40 is attached to the door frame 18 so as to sandwich the flange portion 26 of the door frame 18, it is possible to inhibit a deformation of the design surface of the glass run channel 40 due to thermal effect, or the like.

In the present embodiment, as shown in FIG. 1, the connecting portion 52 of the bracket 50 is connected to the door frame 18, and the pillar frame 46 is connected to the bracket 50 with the countersunk screw 58. Thus, the pillar frame 46 is connected to the door frame 18 via the bracket 50. Thus, it is possible to change the shape of the bracket 50 in accordance with the shape and connecting method of the door frame 18 and the pillar frame 46, so general versatility is high.

Furthermore, in the present embodiment, as shown in FIG. 4, the seat portion 68 is provided in the pillar frame 46, and the head portion 58A of the countersunk screw 58 screwed to the fastening hole 56A is accommodated in the seat portion 68. Thus, it is possible for the head portion 58A of the countersunk screw 58 not to protrude from the surface of the bottom wall 59A of the mounting portion 59 of the pillar frame 46. The mounting portion 59 to which the glass run channel 40 is attached is provided in the pillar frame 46, so it is possible to avoid interference between the head portion 58A of the countersunk screw 58 and the glass run channel 40.

In the present embodiment, the bracket 50 has the relief portion 56 for avoiding interference with the seat portion 68 formed in the pillar frame 46. Thus, it is possible to overlappingly arrange the pillar frame 46 and the bracket 50 at least at a portion other than the seat portion 68, so it is possible to improve the stiffness of the pillar frame 46.

The connecting portion 52 is bent at the upper portion of the bracket 50 rearward in the vehicle longitudinal direction with respect to the bracket body 50A, and the cutout portion 54 cut out inward in the vehicle width direction is formed at the proximal portion of the connecting portion 52. In this way, by forming the cutout portion 54 at the proximal portion of the connecting portion 52, bending force is not caused to directly act on the bracket body 50A when the connecting portion 52 is bent with respect to the bracket body 50A. Thus, it is possible to ensure the flatness of the bracket body 50A and to form an R shape at a boundary portion between the bracket body 50A and the connecting portion 52.

### Other Embodiments

As shown in FIG. 1, in the present embodiment, the connecting portion 52 is provided at the upper portion of the bracket 50, and the upper end portion 52A of the connecting portion 52 is arc-welded to the outer wall upper portion 24D2 of the door frame 18. In this way, when the bracket 50 is arc-welded to the door frame 18, it is possible to reduce cost in comparison with, for example, the case where a fastening hole for fastening the bracket 50 is formed in the door frame 18. However, in the present embodiment, it is just required to be able to connect the bracket 50 to a portion of the door frame 18, which is different from the flange portion 26, so the connecting portion 52 does not always need to be the outer wall upper portion 24D2 of the door frame 18. The welding method used for the connecting portion 52 is also not limited to arc welding, and may be laser welding or spot welding. Furthermore, the connecting method used for the connecting portion 52 is also not limited to welding.

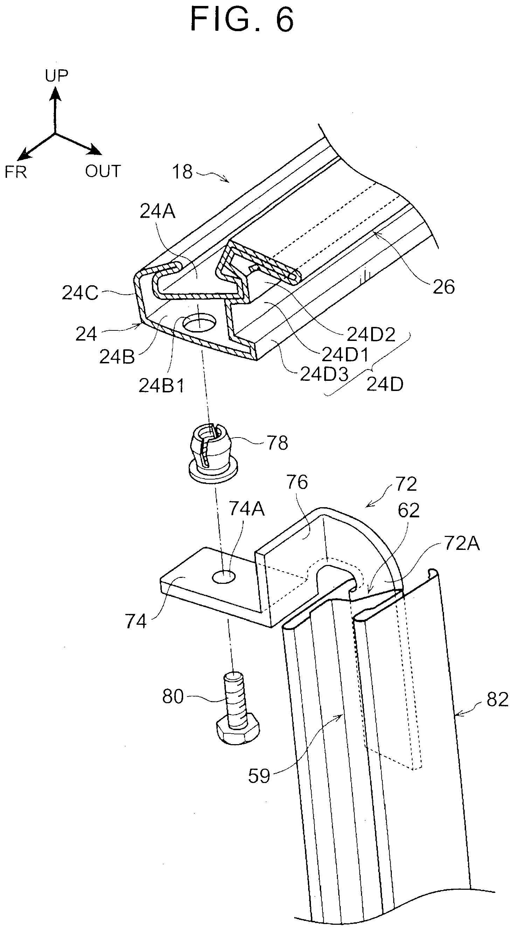

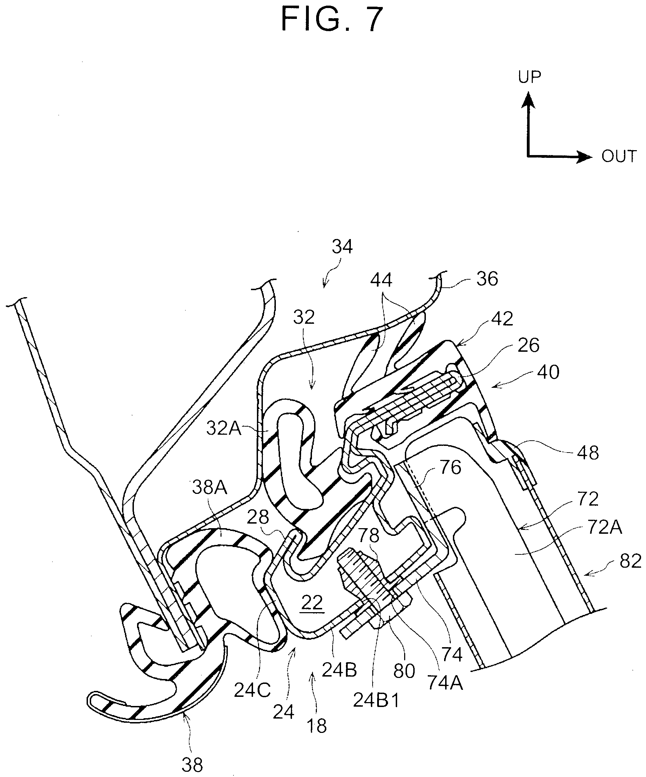

For example, as shown in FIG. 6 and FIG. 7, a bracket 72 may be fastened and connected to the lower wall portion 24B of the door frame 18. In this case, the position of a connecting portion 74 that serves as a first connecting portion in the bracket 72 is on the inner side of the outer wall upper portion 24D2 in the vehicle width direction. Therefore, the connecting portion 74 and a bracket body 72A need to ensure a predetermined distance in the vehicle width direction.

For example, a bent piece 76 bent forward in the vehicle longitudinal direction is provided at the upper portion of the bracket body 72A, and the connecting portion 74 that is bent inward in the vehicle width direction is provided at the lower end portion of the bent piece 76. Thus, it is possible to project the connecting portion 74 inward in the vehicle width direction with respect to the bracket body 72A and to ensure a predetermined distance in the vehicle width direction between the connecting portion 74 and the bracket body 72A.

A through-hole 74A is formed at the center portion of the connecting portion 74, and a through-hole 24B1 is formed at the lower wall portion 24B of the door frame 18. A grommet 78 is inserted in the through-hole 24B1, and a bolt 80 is allowed to be fastened via the grommet 78. On the other hand, the bracket body 72A, which serves as the second connecting portion, and a pillar frame 82 may be connected to each other by spot welding, or the like.

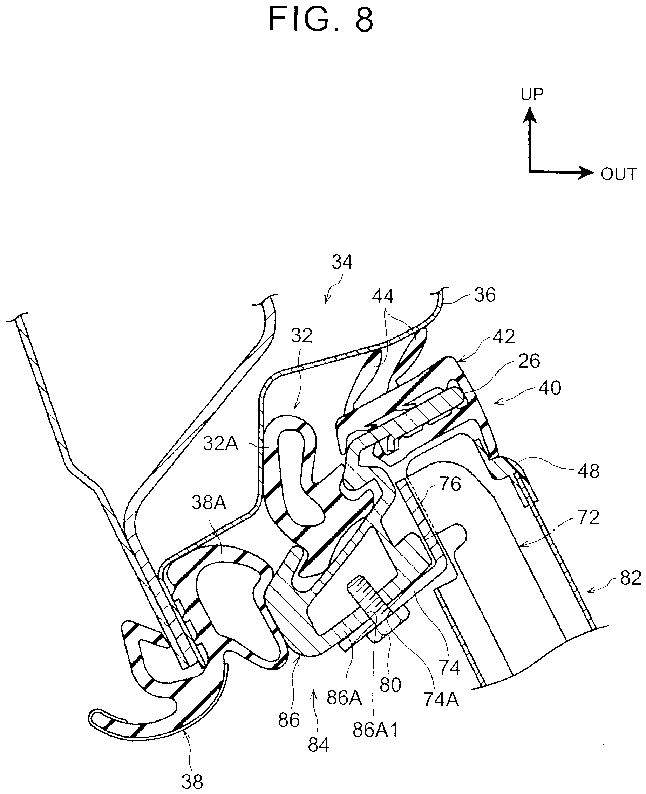

In the above-described embodiment, the door frame 18 is formed by roll forming; instead, the door frame may be formed by extrusion molding. In this case, for example, as shown in FIG. 8, it is possible to change the thickness of a door frame 84. Therefore, in a lower wall portion 86A that constitutes part of a frame body portion 86 of the door frame 84, it is possible to tap a screw thread 86A1 for fastening a bolt 80. When the door frame is formed by extrusion molding, it is possible to reduce weight and cost in comparison with the case where the door frame is formed by roll forming. The door frame may be formed by another working method, such as drawing, other than extrusion molding.

In the present embodiment, the rear side door 10 is described; however, the same applies to a front side door.

The embodiment of the invention is described above; however, the invention is not limited to the above embodiment. The invention may be, of course, implemented in various modes other than the above-described embodiment without departing from the scope of the invention.

## Claims

1. A vehicle side door structure comprising:
a door frame (18), a glass run channel (40) being attached to the door frame, the door frame supporting an end portion of a door glass (16);
a bracket (50) connected to a portion of the door frame; and
a pillar frame (46) mounted on the bracket so as to extend in a vehicle up-and-down direction on an inner side of the door frame, the pillar frame supporting an end portion of the door glass together with the door frame,
**characterised in that**
the door frame has a flange portion (26) extending outward in a vehicle width direction, the glass run channel (40) being attached to the flange portion so as to sandwich the flange portion; and **in that**
the bracket (50) is connected to a portion of the door frame, which is different from the flange portion.

2. The vehicle side door structure according to claim 1, **characterized in that**
the bracket has a long plate shape, and includes a first connecting portion (52; 74) extending in a vehicle longitudinal direction at an upper portion of the bracket and connected to the door frame and a second connecting portion (56; 72A) extending in a vehicle width direction on a lower side of the first connecting portion and to which the pillar frame is connected.

3. The vehicle side door structure according to claim 2, **characterized in that**
the second connecting portion is fastened to the pillar frame with a fastener, and the pillar frame has a recessed seat portion in which a head portion of the fastener is accommodated.

4. The vehicle side door structure according to claim 3, **characterized in that**
the second connecting portion has a relief portion that avoids interference with the seat portion.

5. The vehicle side door structure according to any one of claims 1 to 4, **characterized in that**
the door frame is formed of a light metal material by extrusion molding.

## Patentansprüche

1. Fahrzeugseitentüraufbau, der Folgendes aufweist:
einen Türrahmen (18), einen Scheibenlaufkanal (40), der an dem Türrahmen angebracht ist, wobei der Türrahmen einen Endabschnitt einer Türscheibe (16) stützt;
einen Halter (50), der mit einem Abschnitt des Türrahmens verbunden ist; und
einen Säulenrahmen (46), der an dem Halter montiert ist, um sich so in einer Fahrzeug-Oben-und-Unten-Richtung auf einer Innenseite des Türrahmens zu erstrecken, wobei der Säulenrahmen einen Endabschnitt der Türscheibe zusammen mit dem Türrahmen stützt, **dadurch gekennzeichnet, dass** der Türrahmen einen Flanschabschnitt (26) hat, der sich in einer Fahrzeugbreitenrichtung auswärts erstreckt, wobei der Scheibenlaufkanal (40) an dem Flanschabschnitt angebracht ist, um den Flanschabschnitt dazwischen zu nehmen; und dadurch dass der Halter (50) mit einem Abschnitt des Türrahmens verbunden ist, der von dem Flanschabschnitt verschieden ist.

2. Fahrzeugseitentüraufbau nach Anspruch 1, **dadurch gekennzeichnet, dass** der Halter eine lange Plattenform hat und einen ersten Verbindungsabschnitt (52; 74), der sich in einer Fahrzeuglängsrichtung an einem oberen Abschnitt des Halters erstreckt und mit dem Türrahmen verbunden ist, und einen zweiten Verbindungsabschnitt (56; 72A) aufweist, der sich in einer Fahrzeugbreitenrichtung auf einer unteren Seite des ersten Verbindungsabschnitts erstreckt und an dem der Säulenrahmen angeschlossen ist.

3. Fahrzeugseitentüraufbau nach Anspruch 2, **dadurch gekennzeichnet, dass** der zweite Verbindungsabschnitt an dem Säulenrahmen mit einem Befestigungsmittel befestigt ist und der Säulenrahmen einen vertieften Sitzabschnitt hat, in dem ein Kopfabschnitt des Befestigungsmittels beherbergt ist.

4. Fahrzeugseitentüraufbau nach Anspruch 3, **dadurch gekennzeichnet, dass** der zweite Verbindungsabschnitt einen Entlastungsabschnitt hat, der eine Beeinträchtigung mit dem Sitzabschnitt vermeidet.

5. Fahrzeugseitentüraufbau nach einem der Ansprüche 1 bis 4, **dadurch gekennzeichnet, dass** der Türrahmen aus einem Leichtmetallmaterial durch ein Extrusionsformen ausgebildet ist.

## Revendications

1. Structure de porte latérale de véhicule comprenant : un cadre de porte (18), un canal de guidage de vitre (40) étant fixé au cadre de porte, le cadre de porte supportant une partie d'extrémité d'une vitre de porte (16) ; un support (50) raccordé à une partie du cadre de porte ; et un bâti de pilier (46) monté sur le support afin de s'étendre dans la direction ascendante et descendante du véhicule sur un côté interne du cadre de porte, le bâti de pilier supportant une partie d'extrémité de la vitre de porte conjointement avec le cadre de porte, **caractérisée en ce que** le cadre de porte a une partie de bride (26) s'étendant vers l'extérieur dans le sens de la largeur du véhicule, le canal de guidage de vitre (40) étant fixé à la partie de bride afin de prendre en sandwich la partie de bride ; et **en ce que** le support (50) est raccordé à une partie du cadre de porte, qui est différente de la partie de bride.

2. Structure de porte latérale de véhicule selon la revendication 1, **caractérisée en ce que** le support a une forme de plaque longue et comprend une première partie de raccordement (52 ; 74) s'étendant dans la direction longitudinale du véhicule au niveau d'une partie supérieure du support et raccordée au cadre de porte et une seconde partie de raccordement (56 ; 72A) s'étendant dans le sens de la largeur du véhicule sur un côté inférieur de la première partie de raccordement et à laquelle le bâti de pilier est raccordé.

3. Structure de porte latérale de véhicule selon la revendication 2, **caractérisée en ce que** la seconde partie de raccordement est fixée sur le bâti de pilier avec une fixation, et le bâti de pilier a une partie de siège évidée dans laquelle une partie de tête de la fixation est logée.

4. Structure de porte latérale de véhicule selon la revendication 3, **caractérisée en ce que** la seconde partie de raccordement a une partie en relief qui évite l'interférence avec la partie de siège.

5. Structure de porte latérale de véhicule selon l'une quelconque des revendications 1 à 4, **caractérisée en ce que** le cadre de porte est formé avec un matériau métallique léger par moulage par extrusion.
